# EUROPEAN PATENT APPLICATION

(11) **EP 2 355 382 A1**
(43) Date of publication of application: **10.08.2011**
(21) Application number: 10001199.8
(22) Date of filing: 05.02.2010
(51) Int. Cl.: H04H 60/12, H04H 60/37, H04H 60/47

(54) **Receiving device and a method for playback in a mobile receiver**

(71) Applicant: Harman Becker Automotive Systems GmbH, 76307 Karlsbad (DE)
(72) Inventor: Münch, Tobias, 75334 Straubenhardt (DE); Schmauderer, Philipp, 75339 Höfen (DE); Benz, Christoph, 77797 Ohlsbach (DE); Körner, Andreas, 76337 Waldbronn (DE)
(74) Representative: Koch Müller Patentanwaltsgesellschaft mbH

(57) **Abstract**

A receiving device (1) for mobile reception of a receive signal (RF) containing an audio signal (A) and a method for playback in a mobile receiver (1), comprising
- a receiving circuit (110, 120, 130), which is configured to receive the receive signal (RF) and which is configured to output the audio signal (A) and information (RDS_RX, ID3_RX) associated with the audio signal (A),
- an arithmetic unit (200, CPU, DSP), which is configured to evaluate the information (RDS_RX, ID3_RX) associated with the audio signal (A),
- a database (300, DB) or a connection (130) to an external database (eDB), whereby database entries (310, 320, 330, 340, 350) with the associated data fields (ID3_DB) and the associated audio data (AD) are stored in the database (300, DB, eDB),
- wherein the arithmetic unit (200) is configured to assign the information (RDS_RX, ID3_RX) to at least one database entry (330),
- wherein the arithmetic unit (200) is configured to output the audio data (A3) of the assigned database entry (330) based on a detected disturbance (DIS) of the reception of the audio signal (A).

## Description

The present invention relates to a receiving device and a method for playback in a mobile receiver.

German Pat. Appl. No. DE 101 11 590 A1 discloses a method and a circuit arrangement for demodulating the RDS signal. The radio data system (RDS) has been introduced for VHF radio stations to transmit data to a radio receiver, the transmitted data containing information about the radio stations and the program broadcast by them. These data are displayed on an optical display.

RDS data are, for example, the program identification PI, which indicates the received program or the name of the tuned-in station, or program type identification PTY, which indicates the type of program (music, news, etc.), or traffic announcements TA, or radio text RT, which contains program-related information such as, e.g., information on the pieces of music, artist, program changes, and the like.

The radio data system is used principally in car radios. For example, when the reception of the station currently tuned in deteriorates, RDS-capable car radios automatically switch over to a better, or best receivable, station broadcasting the same program. The information required to do this is the program identification (PI) information and the list of alternative frequencies AF, being broadcast by RDS-capable radio stations. The RDS signal is a binary signal that consists of a continuous binary data stream with a bit rate of 1.1875 kbits/s.

European Pat. Appl. No. EP 1 274 175 A2 discloses a method for checking the reception at alternative reception frequencies in a car radio receiver. In order to make the checking of the reception quality at an alternative reception frequency as inaudible as possible, a substitute signal is used, while the receiver is tuned to an alternative reception frequency. The substitute signal is used instead of muting the car best-radio receiver. A noise signal or part of the already playbacked audio signal is suitable as the substitute signal.

Furthermore, receivers are known that can be connected to the Internet over a wireless connection (WLAN, UMTS) and receive programs as live streams (Ogg, etc.) over the wireless connection.

The object of the invention is to improve as much as possible a receiving device particularly in regard to possible undisturbed audio playback.

Said object is attained by a receiving device with the features of independent claim 1. Advantageous refinements are the subject of dependent claims and included in the description.

Accordingly, a receiving device for mobile reception is provided. A received signal, particularly one received by radio transmission, includes an audio signal and information. The information in this case belongs to the audio signal and relates to the content of the audio signal.

The receiving device has at least one receiving circuit, which is set up to receive the receive signal. The receiving circuit in addition is set up to output the audio signal and the information associated with the audio signal.

The receiving device has an arithmetic unit, which is set up to evaluate the information associated with the audio signal. For the evaluation, the arithmetic unit can have a processor, for example. Preferably, the arithmetic unit is designed for the input and temporary storage of the information.

The receiving device, furthermore, has a database or a connection to an external database. The connection to the external database occurs preferably over a network, such as the Internet.

Database entries with the associated data fields and the associated audio data are stored in the database. The received audio signal and the audio data can be output by the receiving device for audio playback.

The arithmetic unit is set up to assign the information to at least one database entry. Alternatively, a plurality of database entries can be assigned to the information. The arithmetic unit is set up to output the audio data of the at least one assigned database entry based on a disturbance of the audio signal reception as detected by the receiving device.

The object of the invention is furthermore to provide an improved method for the playback of audio contents.

Said object is achieved by the method with the features of independent claim 3. Advantageous refinements are the subject of dependent claims and included in the description.

Accordingly, a method is provided for audio playback in a mobile receiver.

A receive signal is received by a receiving circuit. The receive signal contains an audio signal and information describing the audio signal. The information is, for example, a radio text of an RDS signal or an ID3 tag for a streamed mp3 file or a auto-tag generated by an external or internal database analyzing a part of the received audio signal.

In the method, at least one database entry in a database is assigned to the information of the receive signal. For the assignment, similarities between the information and the specific database entry are determined advantageously.

Disturbance of the audio signal is determined, for example, by means of the receiving circuit and/or the arithmetic unit. A disturbance is, for example, an at least temporary interruption of the reception, a high error rate, a small amplitude, or high noise in the receive signal.

At least during the disturbance of the receive signal, audio data associated with the database entry are output. The output of the audio data of the database entry can be ended when an end of the disturbance has been detected.

The refinements described hereafter relate both to the receiving device and to the method for audio playback. In this case, functions of the receiving device emerge from the method features and the method features from the functions of the receiving device.

According to an advantageous refinement, the arithmetic unit and/or the receiving circuit are set up to detect the disturbance of the audio signal reception. To this end, quality information can be advantageously evaluated, for example, by a threshold value comparison.

It is provided according to a preferred refinement that the arithmetic unit is formed to compare a plurality of information fields of the information with the associated database fields of the respective database entry. Preferably, to accomplish this, the arithmetic unit has a memory for the temporary storage of the information. The information fields are specified, for example, in the ID3 tag as bpm (beats per minute), genre, artist, composer, album, title, etc. The user can preferably configure or it is fixedly predefined which information fields and database fields are evaluated.

Preferably, the assignment of the at least one database entry to the information occurs based on one or more comparison results. The arithmetic unit is formed advantageously to determine the comparison result(s) in the form of a similarity value or the like.

According to an advantageous refinement variant, the arithmetic unit is formed to weight information fields and the associated database fields. The weighting occurs preferably with a weighting factor, which can also be called a priority factor for prioritizing. The weighting preferably occurs in addition to the comparison. Preferably, the weighting is formed to be adjustable, for example, by changing the weighting factors. For example, a user can weight certain fields of the ID3 tag higher than others. Preferably, the assignment of the at least one database entry to the information occurs with at least one weighting factor.

It is provided in another refinement that the arithmetic unit is formed to determine a ranking of a plurality of database entries based on the comparison results and/or the weighting factor, particularly by means of a ranking factor. With use of the comparison results and the weighting factors, a probability for an assignment can be determined using an algorithm.

According to an advantageous embodiment, additional features, such as instruments or rhythm of the audio signal, are determined from the audio signal and compared with features of the audio data in the database by means of a digital signal processor. The arithmetic unit is advantageously formed to evaluate this additional comparison result for the assignment.

It is provided in a preferred refinement that the arithmetic unit is formed to add the information and the audio signal of the received signal to the database as a new database entry with audio data. The addition occurs preferably when a ranking threshold is exceeded by a ranking factor of the ranking.

According to an embodiment, the arithmetic unit or the receiving circuit is formed to detect a disturbance. For the detection, the arithmetic unit or receiving circuit is formed to determine a quality particularly based on a receive field strength, a quality signal LQI (link quality indicator), etc. Alternatively or in combination, the arithmetic unit or the receiving circuit is formed to determine a quality of the audio signal. The quality of the audio signal can be determined, for example, based on a detection of an interruption of the audio signal, or an evaluation of the amplitude or of the noise of the audio signal. Preferably, a signal corresponding to the quality is compared with a quality threshold.

According to a preferred embodiment, the arithmetic unit is formed for continuous assignment; in this case, the assignment of at least one database entry in the database to the information is continuously updated during the reception of the audio signal (and receive signal).

Preferably, part of the audio signal is buffered continuously. In an alternative embodiment the assignment (of the at least one database entry in the database to the temporarily stored information) is started from determining the disturbance, whereby the assignment method is carried out during the output of the buffered audio signal.

The arithmetic unit is advantageously formed in order to output the audio data to cross-fade or switch from the audio signal to the audio data. Preferably, to this end, the sound volume of the audio signal is decreased and the sound volume of the audio data is increased.

Preferably, the arithmetic unit is formed to adjust the audio data to a current clock and/or to a speed of the audio signal particularly by means of a digital signal processor.

The previously described refinement variants are especially advantageous both individually and in combination. In this regard, all refinement variants can be combined with one another. Some possible combinations are explained in the description of the exemplary embodiments shown in the figures. These possible combinations of the refinement variants, depicted therein, are not definitive, however.

In the following text, the invention will be described in greater detail by exemplary embodiments using graphic illustrations.

In the drawing:
- FIG. 1: shows a schematic flowchart of a receiving device;
- FIG. 2: shows a schematic diagram; and
- FIG. 3: shows a schematic illustration of an assignment by means of an evaluation of ID3 tags.

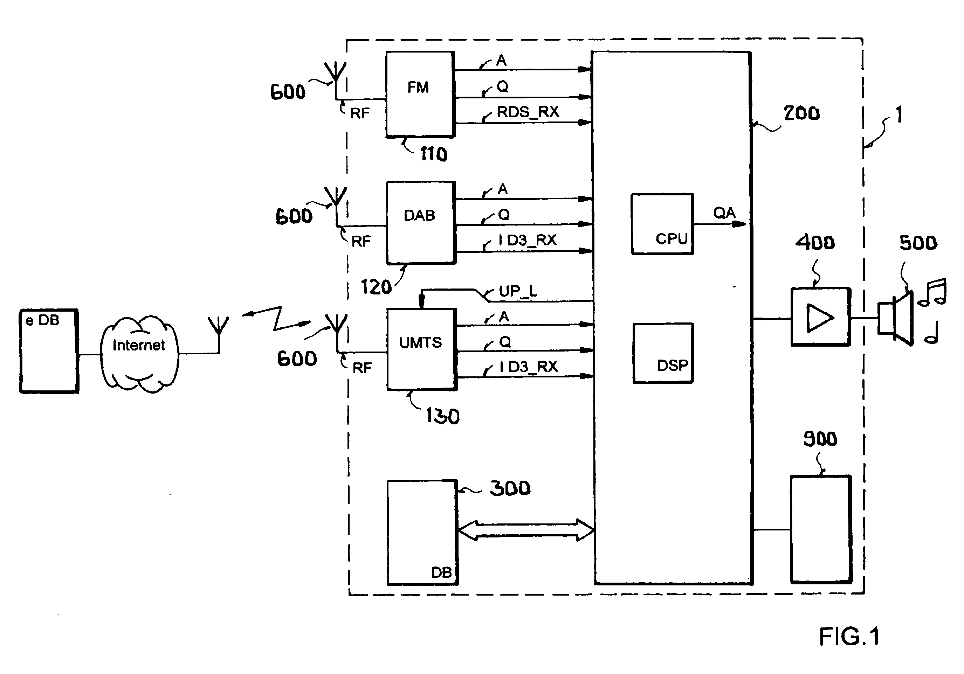

A receiving device 1 is shown schematically in FIG. 1 by a block diagram. Receiving device 1 has several receiving circuits 110, 120, 130, each of which enable radio reception of a receive signal RF via antenna 600. The first receiving circuit 110 is a VHF receiver, which outputs an audio signal A, quality information Q, and digital information RDS_RX. The digital information in this case is the RDS signal, which describes the content of the audio signal A. For example, the current "title" and "artist" of the received audio signal A is contained in the RDS signal.

The second receiving circuit 120 is a DAB receiver, which also outputs an audio signal A, quality information Q, and the information ID3_RX, describing the current audio signal A, in the form of an ID3 tag. The third receiving circuit 130 is a UMTS receiver (Universal Mobile Telecommunications System) and transmitter. The third receiving circuit 130 also outputs an audio signal A, for example, in the mp3 streaming format, quality information Q, and the information ID3_RX, describing the current audio signal A, in the form of an ID3 tag. For the output, receiving circuits 110, 120, 130 are connected to an arithmetic unit 200, which may have a processor CPU and a digital signal processor DSP. An uplink is also possible via UMTS, so that the Internet can be accessed over the uplink connection UP_L by arithmetic unit 200.

Furthermore, receiving device 1 has a local, particularly internal database 300, an amplifier arrangement 400 for connection of loudspeakers 500, and a display unit 900, for example, in form of a display. During the reception of a piece of music by means of a receiving circuit 110, 120, 130, as much information as possible is collected about the content. This can be the "title" and "artist" via Radiotext Plus in the case of analog radio FM or an ID3 tag with "title," "artist," "album," and "genre" in the case of digital stations, as in Internet radio. If no information is broadcasted a part of the received audio signal A is send to an internal/external database, e.g. to the external database "gracenote" using the uplink connection UP_L. The part of the audio signal A is analyzed - e.g. using a so called "Auto-Tag tool" - and the corresponding information is sent back to the receiving device 1 using the receiver 130 and output to the arithmetic unit 200.

An algorithm of arithmetic unit 200 compares the information, so the properties of this current piece of music with the content of local database 300. Instead of the local database, alternatively or in combination a database eDB, accessible via the Internet, can be accessed when a UMTS connection with the Internet is possible.

By means of a digital signal processor, the algorithm alternatively or in combination can determine the similarity of two audio signals by determining the instruments or rhythm. The algorithm provides a prioritized list of pieces of music, which are suitable for replacing the received program by the local contents of database 300, if the received data stream breaks off for example. The breaking off of the data stream can be determined, for example, on the basis of quality signal Q or a determined quality of audio signal QA by arithmetic unit 100.

The list is provided with a priority property. The identical piece of music, e.g., if it is also available locally, has the top priority or the top ranking. Other priorities could be:
1 a piece of music by the same artist,
2 a similar or same title by another artist,
3 the same genre, etc.

The user himself can set the prioritization if necessary. If the choice is made and the received data stream in fact breaks off, an inaudible fading is calculated by means of an intelligent fading algorithm, when the same piece of music is locally present, or an intelligent fading, when a different piece of music is to be used. In the simplest case, the current piece of music is simply faded out and then a new piece of music faded in. The pieces of music can also be cross-faded into one another. To this end, the property "bpm" (beats per minute) could then be evaluated to select a piece of music that has the same rhythm and/or beats per minute, to then cross-fade synchronously to the piece of music in local database 300. The changing or cross-fading to a piece of music in local database 300 can be indicated by display 900.

The reception situation is reevaluated within suitable time windows and a decision is then made automatically, which enables a return to the received radio content after or before the piece of music from local database 300 has ended. It is possible in addition that the broadcast and received radio program is replaced by a content of the database, when the broadcast radio program does not correspond to the listener's taste. For example, the spoken content can be replaced by music content.

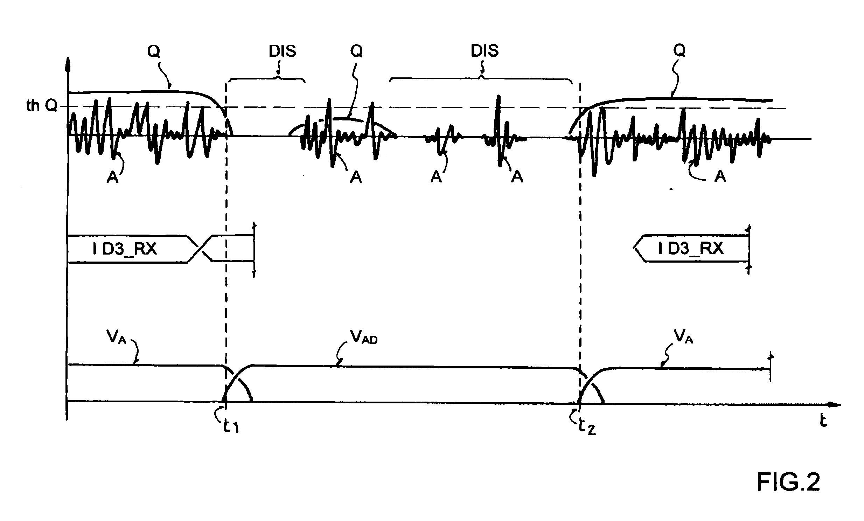

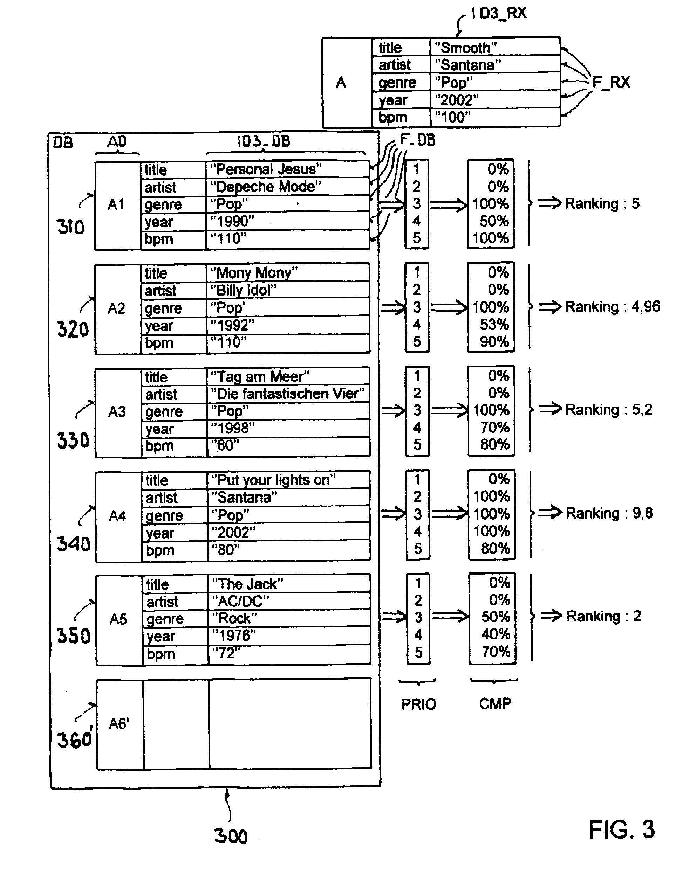

A schematic diagram with the time t is shown in FIG. 2. The audio signal A is output during the reception. Before time point t1, the quality Q of the receive signal RF is greater than the quality threshold thQ, so that a noise-free audio signal A can be output. Accordingly, to set the audio volume of the audio signal A, the control signal VA is adjusted to a constant value, for example, to a maximum. During the reception, moreover, information ID3_RX describing the audio signal A is received and temporarily stored. A database entry in database 300 is assigned to information ID3_RX. The assignment method will be described in greater detail in reference to the embodiment according to FIG. 3.

At time point t1, a disturbance DIS occurs for the first time, which results in the termination of the audio signal A. A disturbance DIS of this type is, for example, caused by deterioration of the reception of receive signal RF. For example, a motor vehicle in which the receiver is working drives through a tunnel. The mobile receiver can also leave the reception range of the receive signal RF briefly or permanently. The disturbance DIS is detected. To this end, for example, the quality Q of the receive signal RF can be compared with the threshold thQ. If the quality Q falls below the threshold thQ, the audio volume VA of the audio signal is reduced. At the same time, the audio volume VAD for audio data in a database entry is increased. The audio data in the database entry are output. No or only a very short pause in the audio playback occurs with this cross-fading process.

Between time points t1 and t2, several disturbances DIS occur, whereby the quality of the receive signal RF does not exceed the threshold thQ. At time point t2, the quality Q again exceeds the threshold thQ, so that cross-fading occurs again from the output of the audio data in the database to the audio signal A. Alternatively, switching can also be carried out between two signal sources, for example, in the case of a short audio playback pause. The switching/cross-fading alternatively can occur later_{;} for example, not until the end of the output of the audio data. After time point t2, new information ID3_RX is again received and stored temporarily, which describes the current content of the audio signal A.

FIG. 3 shows an embodiment of the received information ID3_RX and database entries 310 to 350, to illustrate the possibility of assignment.

The receive signal RF has an audio signal A and information ID3_RX describing the audio signal A. The information ID3_RX in FIG. 3 is formed as an ID3 tag. In this regard, at present there are different ID3 tag formats such as ID3v1, ID3v1.1, ID3v2, ID3v2.2, ID3v2.3, or ID3v2.4. In the exemplary embodiment shown in FIG. 3, the ID3 tag has the information fields F_RX: "title," "artist," "genre," "year," and "bpm" (beats per minute) with the corresponding entries "Smooth," "Santana," "Pop," "2002," and "100." The names of the information fields F_RX are provided only for easier understanding of the exemplary embodiment and are not necessarily included in information ID3_RX.

The received information ID3_RX is then to be assigned to one or more database entries 310, 320, 330, 340, 350. The database entries 310, 320, 330, 340, 350 each also have database fields F_DB with the data of an ID3 tag. In the exemplary embodiment of FIG. 3, a plurality of songs are contained in database 300 and categorized by means of the ID3 tags. In the exemplary embodiment of FIG. 3, the song "Smooth" is currently being received as the audio signal A.

The first database entry 310 shows, for example, the database fields F_DB: title: "Personal Jesus"; artist: "Depeche Mode"; genre: "Pop"; year: "1990"; bpm: "100", whose systematics correspond to that of the received information ID3_RX. Therefore, each information field F_RX of the information ID3_RX can be compared with precisely one database field F_DB of the database entry 310. If individual information fields F_RX are missing, a partial comparison can be made accordingly.

The comparison results CMP are indicated as similarities in %, a higher similarity resulting in a higher percentage. For database entry 310, both the content of the database fields "title" and "artist" of the received ID3_RX are very different, so that a similarity of 0% results. In contrast, the contents "genre" and "bpm" concur, so that here a similarity of 100% results. "Year" deviates by 12 years, so that a similarity of 50% is calculated from the difference years. The comparison results CMP are also calculated for all other database entries 320, 330, 340, 350. The comparison results CMP are, moreover, recalculated with each newly received information ID3_RX.

In addition, a prioritization is provided by means of prioritization parameters PRIO. These can also be called weighting or weighting parameters PRIO. The effect of the particular comparison result CMP of a database field F_DB can be adjusted by means of the weighting PRIO. For example, the weighting PRIO can be set by the user or previously by the manufacturer. A rank (ranking) can be determined for each database entry by means of the weighting PRIO and the comparison results CMP. In the exemplary embodiment of FIG. 3, database entry 340 has the highest rank with a value of 9.8. The formula "rank = (6 - PRIO) * CMP /100," for example, can be used to calculate the rank.

If a disturbance of the reception of audio signal A occurs, therefore, cross-fading is carried out to the associated audio data A4 in database entry 340 assigned to the information ID3_RX. It is advantageous to find the exact point in time for both, the received audio signal A and the associated audio data A4 to cross-fade inaudible. This could be done using a cross correlation algorithm. If the reception of the audio signal A continues to be disturbed, the audio data A3 of database entry 330 with the next lower rank is then played back afterwards. If a ranking factor of the ranking exceeds a ranking threshold, the information ID3_RX and the audio signal A of the receive signal can be added to database 300 as a new database entry 360' with the corresponding audio data A6' and database fields ID3_DB.

The invention is not limited to the shown embodiment variants in FIGS. 1 through 3. For example, it is possible to compare the audio signal A and the corresponding audio data by means of a digital signal processor in regard to clock speed or dynamics of the audio playback (not shown in the figures). It is also possible to compare other information fields and database fields, such as, for example, the album title or the composer. The functionality of the receiving device according to FIG. 1 can be used with particular advantage in an infotainment system of a motor vehicle.

### List of Reference Characters

- 1: mobile receiving device, car radio, infotainment system
- 110, 120, 130: receiving circuit
- 200: arithmetic unit
- 300, DB: database, local database
- 310, 320, 330, 340,: database entry
- 350:
- 360': new database entry
- 400: amplifier arrangement
- 500: loudspeaker arrangement
- 600: antenna
- 900: display

- RF: receive signal
- A: audio signal
- AD, A1, A2, A3, A4, A5: audio data
- CMP: comparison result
- CPU: processor
- DAB: digital receiving circuit
- DIS: disturbance
- DSP: digital signal processor
- eDB: external database
- F_DB: database field
- F_RX: information field
- FM: FM receiving circuit
- ID3_DB: database field group, ID3 tag
- ID3_RX: information, ID3 tag

- PRIO: priority, weighting
- Q: quality
- QA: audio quality
- RDS_RX: information, RDS signal
- t: time
- t1, t2: point in time
- thQ: threshold
- UMTS: UMTS receiver/sender
- UP_L: UpLink
- VA, VAD: volume

## Claims

1. A receiving device (1) for mobile reception of a receive signal (RF) containing an audio signal (A), comprising
- a receiving circuit (110, 120, 130), which is configured to receive the receive signal (RF) and which is configured to output the audio signal (A) and information (RDS_RX, ID3_RX) associated with the audio signal (A),
- an arithmetic unit (200, CPU, DSP), which is configured to evaluate the information (RDS_RX, ID3_RX) associated with the audio signal (A),
- a database (300, DB) or a connection (130) to an external database (eDB), whereby database entries (310, 320, 330, 340, 350) with the associated data fields (ID3_DB) and the associated audio data (AD) are stored in the database (300, DB, eDB),
- wherein the arithmetic unit (200) is configured to assign the information (RDS_RX, ID3_RX) to at least one database entry (330),
- wherein the arithmetic unit (200) is configured to output the audio data (A3) of the assigned database entry (330) based on a detected disturbance (DIS) of the reception of the audio signal (A).

2. The receiving device (1) according to claim 1,
- wherein the arithmetic unit (200) and/or the receiving circuit (110, 120, 130) are configured to detect the disturbance (DIS) of the reception of the audio signal (A).

3. A method for playback in a mobile receiver (1),
- wherein a receive signal (RF) is received by a receiving circuit (110, 120, 130), the receive signal (RF) containing an audio signal (A) and information (RDS_RX, ID3_RX) describing the audio signal (A),
- wherein at least one database entry (330) in a database (300) is assigned to the information (RDS_RX, ID3_RX),
- wherein a disturbance (DIS) of the audio signal (A) is determined, and
- wherein audio data (A3) associated with the database entry (330) are output at least during the disturbance (DIS).

4. The method according to claim 3,
- wherein a plurality of information fields (F_RX) of the information (RDS_RX, ID3_RX) are compared with associated database fields (F_DB) of the respective database entry (310, 320, 330, 340, 350) and
- wherein the assignment of the at least one database entry (310, 320, 330, 340, 350) to the information (RDS_RX, ID3_RX) occurs based on one or more comparison results (CMP).

5. The method according to any one of the preceding claims,
- wherein information fields (F_RX) of the information (RDS_RX, ID3_RX) and associated database fields (F_DB) in the database entry (330) are weighted based on a weighting factor (PRIO) and
- wherein the assignment of the at least one database entry (310, 320, 330, 340, 350) to the information (RDS_RX, ID3_RX) occurs with at least one weighting factor (PRIO).

6. The method according to claim 4 or 5,
- wherein a ranking of a plurality of database entries (310, 320, 330, 340, 350) occurs based on the comparison results (CMP) and/or of the weighting factor (PRIO).

7. The method according to claim 6,
- wherein the information (RDS_RX, ID3_RX) and the audio signal (A) of the receive signal (RF) are added to the database (300, DB) as a new database entry (360') with audio data (A6'), when a ranking threshold is exceeded by a ranking factor (5.2) of the ranking.

8. The method according to any one of the preceding claims,
- wherein to detect a disturbance (DIS) a quality (Q) of the receive signal (RF) and/or a quality (QA) of the audio signal (A) is determined and compared with a quality threshold (thQ).

9. The method according to any one of the preceding claims,
- wherein the assignment of the at least one database entry (310, 320, 330, 340, 350) in the database (300) to the information (RDS_RX, ID300_RX) is continuously updated during the reception of the audio signal (A).

10. The method according to any one of the preceding claims,
- wherein in order to output the audio data (AD) cross-fading or switching from the audio signal (A) to the audio data (AD) occurs.

11. The method according to any one of the preceding claims,
- wherein to output the audio data (AD) in the database (300) the audio data (AD) is adjusted to a current rhythm and/or beats per minute of the audio signal (A).

## Amended claims

### Amended claims in accordance with Rule 137(2) EPC.

**1.** A receiving device (1) for mobile reception of a receive signal (RF) containing an audio signal (A), comprising
- a receiving circuit (110, 120, 130), which is configured to receive the receive signal (RF) and which is configured to output the audio signal (A) and information (RDS_RX, ID3_RX) associated with the audio signal (A), the information (RDS_RX, ID3_RX) having a plurality of information fields (F_RX) of a current piece of music,
- an arithmetic unit (200, CPU, DSP), which is configured to evaluate the information (RDS_RX, ID3_RX) associated with the audio signal (A),
- a database (300, DB) or a connection (130) to an external database (eDB), whereby database entries (310, 320, 330, 340, 350) with the associated data fields (ID3_DB) and the associated audio data (AD) are stored in the database (300, DB, eDB),
- wherein the arithmetic unit (200) is configured to assign the information (RDS_RX, ID3_RX) to at least one database entry (330) by comparing the information fields (F_RX) of the current piece of music with the content of the database (300, DB),
- wherein the arithmetic unit (200) is configured to output the audio data (A3) of the assigned database entry (330) based on a detected disturbance (DIS) of the reception of the audio signal (A),
- wherein in order to output the audio data (AD) cross-fading or switching from the audio signal (A) to the audio data (AD) occurs, and
- wherein an inaudible fading is calculated by means of an fading algorithm, when the same piece of music is present in the database (300, DB).

**2.** The receiving device (1) according to claim 1,
- wherein the arithmetic unit (200) and/or the receiving circuit (110, 120, 130) are configured to detect the disturbance (DIS) of the reception of the audio signal (A).

**3.** A method for playback in a mobile receiver (1),
- wherein a receive signal (RF) is received by a receiving circuit (110, 120, 130), the receive signal (RF) containing an audio signal (A) and information (RDS_RX, ID3_RX) describing the audio signal (A), the information (RDS_RX, ID3_RX) having a plurality of information fields (F_RX) of a current piece of music,
- wherein at least one database entry (330) in a database (300) is assigned to the information (RDS_RX, ID3_RX) by comparing the information fields (F_RX) of the current piece of music with the content of the database (300, DB),
- wherein a disturbance (DIS) of the audio signal (A) is determined,
- wherein audio data (A3) associated with the database entry (330) are output at least during the disturbance (DIS),
- wherein in order to output the audio data (AD) cross-fading or switching from the audio signal (A) to the audio data (AD) occurs, and
- wherein an inaudible fading is calculated by means of an fading algorithm, when the same piece of music is present in the database (300, DB).

**4.** The method according to claim 3,
- wherein the plurality of information fields (F_RX) of the information (RDS_RX, ID3_RX) are compared with associated database fields (F_DB) of the respective database entry (310, 320, 330, 340, 350) and
- wherein the assignment of the at least one database entry (310, 320, 330, 340, 350) to the information (RDS_RX, ID3_RX) occurs based on one or more comparison results (CMP).

**5.** The method according to any one of the claims 3 or 4,
- wherein the information fields (F_RX) of the information (RDS_RX, ID3_RX) and associated database fields (F_DB) in the database entry (330) are weighted based on a weighting factor (PRIO), and
- wherein the assignment of the at least one database entry (310, 320, 330, 340, 350) to the information (RDS_RX, ID3_RX) occurs with at least one weighting factor (PRIO).

**6.** The method according to claim 4 or 5,
- wherein a ranking of a plurality of database entries (310, 320, 330, 340, 350) occurs based on the comparison results (CMP) and/or of the weighting factor (PRIO).

**7.** The method according to claim 6,
- wherein the information (RDS_RX, ID3_RX) and the audio signal (A) of the receive signal (RF) are added to the database (300, DB) as a new database entry (360') with audio data (A6'), when a ranking threshold is exceeded by a ranking factor (5.2) of the ranking.

**8.** The method according to any one of the claims 3 to 7,
- wherein to detect a disturbance (DIS) a quality (Q) of the receive signal (RF) and/or a quality (QA) of the audio signal (A) is determined and compared with a quality threshold (thQ).

**9.** The method according to any one of the claims 3 to 8,
- wherein the assignment of the at least one database entry (310, 320, 330, 340, 350) in the database (300) to the information (RDS_RX, ID300_RX) is continuously updated during the reception of the audio signal (A).

**10.** The method according to any one of the claims 3 to 9,
- wherein to output the audio data (AD) contained in the database (300) the audio data (AD) is adjusted to a current rhythm and/or beats per minute of the audio signal (A).
